(19) Europäisches Patentamt

European Patent Office

Office européen des brevets

(11) **EP 4 741 035 A1**

## (12) EUROPEAN PATENT APPLICATION

(43) Date of publication:
**13.05.2026 Bulletin 2026/20**

(21) Application number: **24211515.2**

(22) Date of filing: **07.11.2024**

(51) International Patent Classification (IPC):
**B01D 39/18** (2006.01)

(52) Cooperative Patent Classification (CPC):
**B01D 39/18; B01D 46/0001;** B01D 2239/065;
B01D 2239/10; B01D 2239/1216; B01D 2239/1258;
B01D 2239/1291

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Neenah Gessner GmbH
83052 Bruckmühl (DE)**

(72) Inventors:
- **Niederhuber, Armin
  83052 Bruckmühl (DE)**
- **Kampe, Anja
  83052 Bruckmühl (DE)**

(74) Representative: **Hoffmann Eitle
Patent- und Rechtsanwälte PartmbB
Arabellastraße 30
81925 München (DE)**

## (54) PULSE FILTER

(57) The present invention relates to a filter medium comprising a base web of cellulose fibers, wherein the base web comprises a first and a second layer of cellulose fibers and a transition region between the first and the second layers, wherein the cellulose fibers of the first layer and the cellulose fibers of the second layer are intertwined in the transition region, wherein the first layer comprises more cellulose fibers, expressed as mass of cellulose fibers per unit area, than the second layer, and wherein the base web has a high specific volume of from $4\,m^3/g$ to $9\,m^3/g$. The present invention further relates to a filter arrangement, a filter element, an air filter and a pulse filter comprising the above filter medium.

EP 4 741 035 A1

**Description**

**Technical Field of the Invention**

The present invention relates to a filter medium, in particular to a cleanable filter medium. The present invention moreover relates to a filter arrangement, a filter element, an air filter and a pulse filter comprising the filter medium.

**Prior Art**

Nowadays, there are also requirements on filter materials to be more environmentally friendly in being biodegradable. At the same time, the filter material should maintain good filter performance and efficiency. A filter for cleaning air and gases with a filter material of cellulose fibers is described in US 2012-167771 A1. Another example for a disintegrable filter material which is water dissolvable and made of cellulose acetate fiber tows is given in JP-H09103280 A. CN 102691234 A describes a multi-layer paper filter material (for cigarettes) and its process with a focus on environmental protection. The filter materials described in US 2012-167771, JP-H09103280 A and CN 102691234 A are intended to be used in cigarettes, so that they are not cleanable or reusable.

One example for a method to produce multilayer paper is given in US 2010-000693 A1 which uses cellulose fibers. Another method for the production of a multilayer-ply web, in which different pulp suspensions can have different compositions and a fiber web machine for its production is described in EP 3540119 A1. A multi-phase filter medium based on hardwood and softwood fibers is described in US 2010-116138 A1. Rotoformers are used in the working examples of US 2010-116138 A1 to prepare the filter media. Another document wherein multilayer paper webs based on hard and softwood fibers are formed is US 6464830 B1. However, these documents are not concerned with cleanable filters.

There are filter materials that due to their structure are cleanable filter materials.

Surface filter materials have smaller pores in the first filtration layer in flow direction. The pores in the following layer are larger. Due to this structure of the filter material, virtually all particles, regardless of their size, are separated at the outer surface (first layer) of the filter material and hardly any particles reach the inner layer(s). This results in the formation of a filter cake on the outer surface of the filter material. The filter cake is removable, i.e. the filter material is cleanable, by cleaning steps such as tapping, shacking, washing, pressure shock, or backwashing. For removing the filter cake by pressure shock or backwashing, clean gas or liquid is pressurized against the initial flow direction from the downflow side of the filter. Therefore, the cleanable filters are also denoted as pulse filters. The cleaned surface of the filter material can then be used for another pulse cycle (which corresponds to a dust loading cycle). Apart from the general filtering properties such as air permeability and dust absorption, the number of cycles that the cleanable filter material can be used without unacceptably high increase in pressure drop throughout the material, e.g. due to particles that can no longer be removed by the cleaning steps, is an important performance characteristic of the filter material. As will be appreciated, the number of cycles that the cleanable filter material can be used effectively translates into the lifetime of the filter material.

WO 2013/029697 A2 describes a multilayer cleanable filter material and surface filter elements usable for separation of solid impurities in gases and liquids. For better separation of fine particulate matter, the filter material according to WO 2013/029697 A2 comprises a melt blown layer on the upstream side. This requires the use of thermoplastic material. However, the use of several layers of different materials including melt blown materials, leaves room for improvement from an environmental perspective.

**Technical Problem**

Accordingly, there is a need for a cleanable filter medium that is environmentally friendly and nonetheless has excellent general filtering properties, such as air permeability and dust absorption, and when applied as a cleanable filter exhibits a long lifetime.

**Summary of the Invention**

The present invention solves the problems of the prior art by the following means.

In a first aspect, the present invention relates to a filter medium comprising a base web of cellulose fibers, wherein the base web comprises a first and a second layer of cellulose fibers and a transition region between the first and the second layers, wherein the cellulose fibers of the first layer and the cellulose fibers of the second layer are intertwined in the transition region, wherein the first layer comprises more cellulose fibers, expressed as mass of cellulose fibers per unit area, than the second layer, and wherein the base web has a specific volume from 4 $m^3/g$ to 9 $m^3/g$, preferably from 4.5 $m^3/g$ to 8 $m^3/g$, more preferably from 5 $m^3/g$ to 7 $m^3/g$ and most preferably from 5.5 $m^3/g$ to 6.5 $m^3/g$.

In a second aspect, the present invention relates to a filter arrangement comprising an upstream and a downstream filter, wherein the upstream filter is a filter medium according to the first aspect of the present invention and wherein the downstream filter is optionally a glass filter, paper filter or meltblown filter.

According to a third aspect, the present invention is concerned with a filter element comprising a filter medium according to the first aspect of the present invention.

According to a fourth aspect, the present invention relates to an air filter comprising a filter medium according to the first aspect of the present invention.

According to a fifth aspect, the present invention relates to a pulse filter comprising a filter medium according to the first aspect of the present invention.

**Brief description of the drawings**

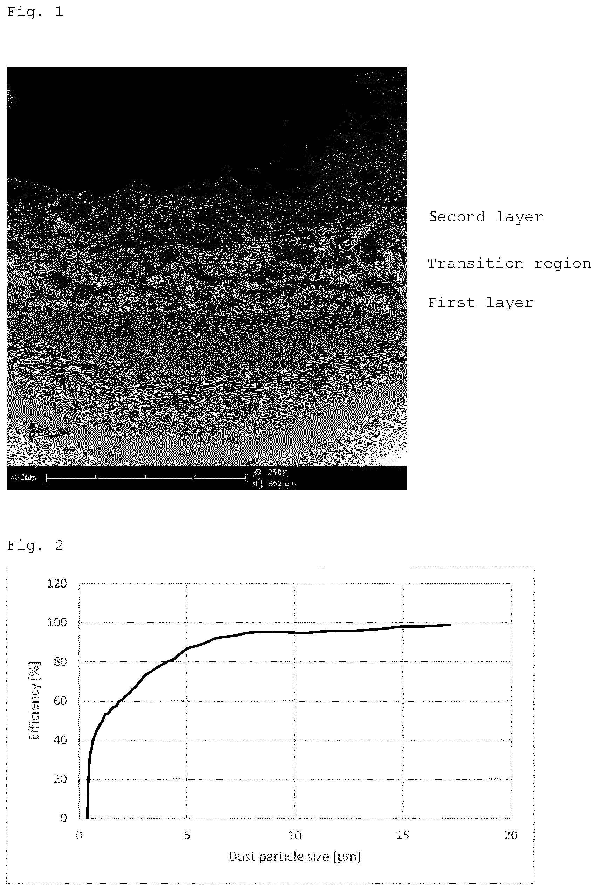

Fig. 1: Figure 1 is a scanning electron microscopy (SEM) image showing the cross-section of the base web produced in Example 1. The following layers are arranged from bottom to top, the first layer is at the bottom of the base web, followed by the transition region, followed by the second layer.

Fig. 2: Figure 2 shows the efficiency of the filter material of Example 1 in relation to the particle size of the dust according to ISO 5011 measurements.

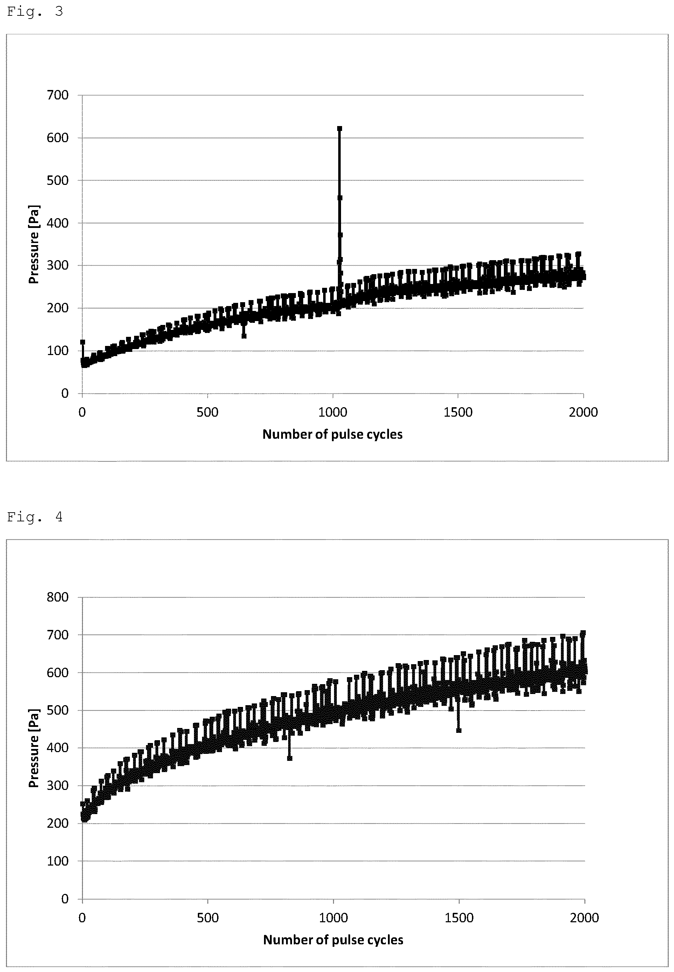

Fig. 3: Figure 3 shows a graph depicting the deterioration of a pulse filter comprising the base web produced in Example 1 over a certain number of pulse cycles. A standardized dust concentration of 5000 mg/m$^3$, a test flow rate of 5 m$^3$/h and a cycle frequency of 2000 pulse cycles à 5 s are used. The graph illustrates the measurement of the filter medium.

Fig. 4: Figure 4 shows a graph depicting the deterioration of a pulse filter comprising the material of Comparative Example 1 (a pulse filter material common in the art) over a certain number of pulse cycles. A standardized dust concentration of 5000 mg/m$^3$, a test flow rate of 5 m$^3$/h and a cycle frequency of 2000 pulse cycles à 5 s are used. The graph illustrates the measurement of the filter medium.

**Detailed Description of the Invention**

In one aspect, the present invention relates to a filter medium comprising a base web of cellulose fibers, wherein the base web comprises a first and a second layer of cellulose fibers and a transition region between the first and the second layers, wherein the cellulose fibers of the first layer and the cellulose fibers of the second layer are intertwined in the transition region, wherein the first layer comprises more cellulose fibers, expressed as mass of cellulose fibers per unit area, than the second layer, and wherein the base web has a specific volume from 4 m$^3$/g to 9 m$^3$/g, preferably from 4.5 m$^3$/g to 8 m$^3$/g, more preferably from 5 m$^3$/g to 7 m$^3$/g and most preferably from 5.5 m$^3$/g to 6.5 m$^3$/g.

In one embodiment, the base web of cellulose fibers included in the filter medium according to the present invention is a two-layered base web consisting of the first and the second layer of cellulose fibers with the transition region between them. Specifically, in this embodiment, the two-layered base web does not have a coating and it is a non-impregnated base web. This is because it was found that the impregnation (that can also be referred to as "saturation") of the base web with a liquid comprising a binder and/or the presence of a coating might compromise the open structure of the base web. However, in this embodiment, the base web may optionally comprise a dry strength agent in an amount of up to 1.5 wt.-% and it may optionally comprise a sizing agent in an amount of up to 3.0 wt.-%, each in terms of the weight of the base web. One or more types of dry strength agents and one or more types of sizing agents may be used, with the total amount of dry strength agents and sizing agents, expressed in terms of the weight of the base web, being up to 1.5 wt.-% and up to 3.0 wt.-%, respectively. For instance, starch may be used as a dry strength agent and alkylene ketene dimers as a sizing agent. Owing to the use of cellulose fibers, which are biodegradable materials based on renewable resources, the filter medium according to the present invention is environmentally friendly.

In one embodiment, the air permeability of the base web included in the filter medium according to the present invention can be from 400 to 800 l/m$^2$s, more preferably from 450 to 750 l/m$^2$s, still more preferably from 500 to 700 l/m$^2$s and most preferably from 550 to 650 l/m$^2$s, wherein the air permeability is measured in accordance with ISO 9237:1995-12.

In one embodiment, the thickness of the base web included in the filter medium according to the present invention can be from 150 μm to 300 μm, more preferably from 170 μm to 280 μm, still more preferably from 190 μm to 260 μm and most preferably from 210 μm to 240 μm, wherein the thickness is measured according to ISO 534: 2012-02 at a pressure of the pressure plate of 0.1 bar.

In one embodiment, the basis weight of the base web included in the filter medium according to the present invention can be from 25 g/m$^2$ to 55 g/m$^2$, more preferably from 30 g/m$^2$ to 50 g/m$^2$, still more preferably from 35 g/m$^2$ to 45 g/m$^2$ and most preferably from 35 g/m$^2$ to 40 g/m$^2$, wherein the basis weight is measured according to ISO 536:2019-11.

In one embodiment, the maximum pore size in the base web can be 90 to 130 $\mu$m and preferably 100 to 120 $\mu$m according to DIN ISO 4003:1990-10. The pore size of many pores in the base web can be from 60 $\mu$m to 80 $\mu$m, preferably from 70 to 77 $\mu$m.

In one embodiment, the tensile strength values in machine direction (MD) of the base web included in the filter medium according to the present invention can be from 10 N/15mm to 40 N/15mm, more preferably from 10 N/15mm to 35 N/15mm, still more preferably from 15 N/15mm to 30 N/15mm and most preferably from 15 N/15mm to 25 N/15mm. The tensile strength in MD is measured in accordance with ISO 1924-2: 2009-05.

In one embodiment, the tensile strength values in cross direction (CD) of the base web included in the filter medium according to the present invention can be from 1 N/15mm to 20 N/15mm, more preferably from 2 N/15mm to 18 N/15mm, still more preferably from 4 N/15mm to 16 N/15mm and most preferably from 6 N/15mm to 14 N/15mm. The tensile strength in CD is measured in accordance with ISO 1924-2: 2009-05.

In one embodiment, the tensile strength ratio MD/CD of the base web included in the filter medium according to the present invention can be from 2 to 3.2, more preferably from 2.1 to 2.8, still more preferably from 2.2 to 2.7. Both, the tensile strength in MD and CD are measured in accordance with ISO 1924-2: 2009-05.

In one embodiment, the elongation at break in MD of the base web included in the filter medium according to the present invention can be between from 1.4% to 2.5%, more preferably from 1.5% to 2.4% and still more preferably from 1.6% to 2.2 % according to ISO 1924-2 2009-05.

In one embodiment, the elongation at break in CD of the base web included in the filter medium according to the present invention can be from 3.0% to 5.5%, more preferably from 3.2% to 5.2%, still more preferably from 3.5% to 5.0% according to ISO 1924-2 2009-5.

In one embodiment, the second layer of the base web included in the filter medium according to the present invention can contain curled fibers. The curled fibers are preferably curled softwood fibers, more preferably curled Northern bleached softwood kraft (NBSK) fibers and most preferably NBSK fibers from Europe. Also, the first layer of the base web can contain uncurled fibers.

In one embodiment, the second layer of the base web included in the filter medium according to the present invention can contain 15 wt.-% to 40 wt.-%, more preferably 20 wt.-% to 35 wt.-% of curled fibers, in terms of the weight of the cellulose fibers of the second layer, which curled fibers are preferably curled softwood fibers, more preferably curled Northern bleached softwood kraft (NBSK) fibers and most preferably curled NBSK fibers from Europe.

In one embodiment, the second layer of the base web included in the filter medium according to the present invention can comprise uncurled fibers, preferably in an amount of 60 wt.-% to 85 wt.-%, more preferably in an amount of at least 65 wt.-% to 80 wt.-%, in terms of the weight of the cellulose fibers of the second layer. As will be appreciated, the sum of the curled and the uncurled fibers in the base web, in terms of weight, is 100 wt.-%. According to a preferred embodiment of the invention, both, the curled and the uncurled fibers in the second layer of the base web, are softwood fibers, wherein the curled fibers are preferably NBSK fibers and more preferably NBSK fibers from Europe.

In one embodiment, the base web included in the filter medium according to the present invention can contain 15 to 40 wt.-%, more preferably 20 to 35 wt.-% and still more preferably 25 to 35 wt.-% of curled fibers, in terms of the weight of the cellulose fibers of the base web in total.

In one embodiment, the weight ratio of fibers of the first layer to the fibers of the second layer may be from 20:80 to 40:60, preferably from 25:75 to 35:65.

In one embodiment, the cellulose fibers of the first layer may comprise softwood fibers and hardwood fibers.

In one embodiment, the cellulose fibers of the second layer can be softwood fibers and are preferably Northern bleached softwood kraft (NBSK) fibers.

In one embodiment, the base web included in the filter medium according to the present invention can be a non-impregnated base web of cellulose fibers.

In one embodiment, the base web included in the filter medium according to the present invention can consist of cellulose fibers.

In one embodiment, the filter medium according to the present invention may consist of the base web of cellulose fibers, which base web preferably consists of cellulose fibers.

In one embodiment, the filter medium according to the present invention can be a cleanable filter medium, which is optionally cleanable by pressure shock pulsing.

When the filter medium according to the present invention is used for the filtration of fluids, such as liquids or air, preferably air, the first layer of cellulose fibers is preferably arranged upstream of the second layer of cellulose fibers.

When in use in a filter arrangement, filter element, air filter or pulse filter according to the appended claims for filtration, the filter medium according to the present invention is preferably arranged upstream of further filters, such as the second filter of the filter arrangement as claimed, which second filter is preferably a glass filter, paper filter or meltblown filter. However, a pre-filter, such as a nonwoven pre-filter, can be present upstream of the filter medium, when the filter arrangement, filter element, air filter or pulse filter according to the claimed invention is in use for filtration. Moreover, another filter, preferably a nonwoven filter, can be present downstream of the filter medium according to the present invention in the filter element, air filter or pulse filter of the claimed invention when they are used for filtration. When the filter arrangement according to the claimed invention is in use, another filter which is preferably a nonwoven filter, can be present downstream of the second filter, which is preferably a glass filter, paper filter or meltblown filter.

In a preferred embodiment, the filter medium according to the present invention comprising the base web of cellulose fibers, which can be a two-layered base web consisting of the first and the second layer of cellulose fibers with the transition region between them, has the following features in combination: the base web has a basis weight from 25 g/m$^2$ to 55 g/m$^2$, a thickness from 150 $\mu$m to 300 $\mu$m, a specific volume from 4 m$^3$/g to 9 m$^3$/g, an air permeability from 400 to 800 l/m$^2$s, a maximum pore size from 90 $\mu$m to 130 $\mu$m and preferably a pore size of many pores from 60 $\mu$m to 80 $\mu$m.

In a more preferred embodiment, the filter medium according to the present invention comprising the base web of cellulose fibers, which may be a two-layered base web consisting of the first and the second layer of cellulose fibers with the transition region between them, has the following features in combination: the base web has a basis weight from 30 g/m$^2$ to 50 g/m$^2$, a thickness from 170 $\mu$m to 280 $\mu$m, a specific volume from 5 m$^3$/g to 7 m$^3$/g, an air permeability from 450 to 750 l/m$^2$s, a maximum pore size from 100 $\mu$m to 120 $\mu$m and preferably a pore size of many pores from 70 $\mu$m to 77 $\mu$m.

In another preferred embodiment, the filter medium according to the present invention comprising the base web of cellulose fibers, which may be a two-layered base web consisting of the first and the second layer of cellulose fibers with the transition region between them, has the following features in combination: the base web has a basis weight from 25 g/m$^2$ to 55 g/m$^2$, a thickness from 150 $\mu$m to 300 $\mu$m, a specific volume from 4 m$^3$/g to 9 m$^3$/g, an air permeability from 400 to 800 l/m$^2$s, a maximum pore size from 90 $\mu$m to 130 $\mu$m, and preferably a pore size of many pores from 60 $\mu$m to 80 $\mu$m , the tensile strength ratio MD/CD of the base web is from 2 to 3.2, the elongation at break in MD of the base web is between from 1.4% to 2.5% and the elongation at break in CD from 3.0% to 5.5%.

In a more preferred embodiment, the filter medium according to the present invention comprising the base web of cellulose fibers, which may be a two-layered base web consisting of the first and the second layer of cellulose fibers with the transition region between them, has the following features in combination: the base web has a basis weight from 30 g/m$^2$ to 50 g/m$^2$, a thickness from 170 $\mu$m to 280 $\mu$m, a specific volume from 5 m$^3$/g to 7 m$^3$/g, an air permeability from 450 to 750 l/m$^2$s, a maximum pore size from 100 $\mu$m to 120 $\mu$m, and preferably a pore size of many pores from 70 $\mu$m to 77 $\mu$m, the tensile strength ratio MD/CD of the base web is from 2.1 to 2.8, the elongation at break in MD of the base web is from 1.5% to 2.4% and the elongation at break in CD is from 3.2% to 5.2%.

In another more preferred embodiment, the filter medium according to the present invention comprising the base web of cellulose fibers, which may be a two-layered base web consisting of the first and the second layer of cellulose fibers with the transition region between them, has the following features in combination: the base web has a basis weight from 25 g/m$^2$ to 55 g/m$^2$, a thickness from 150 $\mu$m to 300 $\mu$m, a specific volume from 4 m$^3$/g to 9 m$^3$/g, an air permeability from 400 to 800 l/m$^2$s, a maximum pore size from 90 $\mu$m to 130 $\mu$m, and preferably a pore size of many pores from 60 $\mu$m to 80 $\mu$m, the tensile strength ratio MD/CD of the base web is from 2 to 3.2, the elongation at break in MD of the base web is from 1.4% to 2.5%, the elongation at break in CD of the base web is from 3.0% to 5.5%, the second layer of the base web contains 15 wt.-% to 40 wt.-% of curled fibers in terms of the cellulose fibers of the second layer and uncurled fibers in an amount of 60 wt.-% to 85 wt.-% in terms of the weight of the cellulose fibers of the second layer, the weight ratio of fibers of the first layer to the fibers of the second layer is from 20:80 to 40:60, the cellulose fibers of the second layer are softwood fibers, the cellulose fibers of the first layer comprise softwood fibers and hardwood fibers, and the base web according to the claimed invention is a non-impregnated base web of cellulose fibers.

In a most preferred embodiment, the filter medium according to the present invention comprising the base web of cellulose fibers, which may be a two-layered base web consisting of the first and the second layer of cellulose fibers with the transition region between them, has the following features in combination: the base web has a basis weight from 30 g/m$^2$ to 50 g/m$^2$, a thickness from 170 $\mu$m to 280 $\mu$m, a specific volume from 5 m$^3$/g to 7 m$^3$/g, an air permeability from 450 to 750 l/m$^2$s, a maximum pore size from 100 $\mu$m to 120 $\mu$m, and preferably a pore size of many pores from 70 $\mu$m to 77 $\mu$m, the tensile strength ratio MD/CD of the base web is from 2.1 to 2.8, the elongation at break in MD of the base web is from 1.5% to 2.4%, the elongation at break in CD of the base web is from 3.2% to 5.2%, the second layer of the base web contains 20 wt.-% to 35 wt.-% of curled fibers in terms of the weight of the cellulose fibers of the second layer and uncurled fibers in an amount of 65 wt.-% to 80 wt.-% in terms of the weight of the cellulose fibers of the second layer, the weight ratio of fibers of the first layer to the fibers of the second layer is from 20:80 to 40:60, the cellulose fibers of the second layer are softwood fibers, the cellulose fibers of the first layer are softwood fibers and hardwood fibers, and the base web is a non-impregnated base web of cellulose fibers, preferably consisting of cellulose fibers.

According to another aspect, the present invention relates to a filter arrangement comprising an upstream and a downstream filter, wherein the upstream filter is a filter medium according to any of the above embodiments and wherein the downstream filter is optionally a glass filter, paper filter or meltblown filter.

According to still another aspect, the present invention relates to a filter element comprising a filter medium according to any of the above embodiments.

The base web included in the filter medium according to the present invention can be made by wet laying of fibers.

In one embodiment, the process for producing a filter medium according to the present invention, comprises the following steps a) to d) to produce the base web,

a) wet laying the first layer of cellulose fibers by disposing a first slurry containing a first liquid and cellulose fibers onto a substrate,

b) while the first layer is still wet, wet laying the second layer by disposing a second slurry containing a second liquid and cellulose fibers onto the first layer to form the transition region,

c) drying to remove the first and the second liquid thus forming the base web, and

d) separating the base web from the substrate.

In one embodiment, in the process according to the present invention the first and the second slurries can be disposed using a paper machine, in particular the first and second slurries can be disposed on the wire of a paper machine, the wire acting as a substrate as mentioned above.

In one embodiment, in the process according to the claimed invention the first and the second liquid can be water.

In one embodiment, in the process according to the present invention the second slurry can contain 15 wt.-% to 40 wt.-% of curled fibers in terms of the weight of the overall amount of fibers in the second slurry.

In one embodiment, in the process according to the present invention the weight ratio of the cellulose fibers of the first layer to the cellulose fibers of the second layer may be from 20:80 to 40:60.

In one embodiment, the steps a) and b) may be performed before drying in step c), so that intertwining of the fibers in the first layer with the fibers in the second layer is allowed by wet laying the second layer on the first layer.

In one embodiment, a process for producing a filter medium according to the claimed invention, comprises the following steps a'), b'), c) and d) to produce the base web,

a') wet laying the second layer of cellulose fibers by disposing a second slurry containing a second liquid and cellulose fibers onto a substrate,

b') while the second layer is still wet, wet laying the first layer by disposing a first slurry containing a first liquid and cellulose fibers onto the second layer to form the transition region,

c) drying to remove the first and the second liquid thus forming the base web, and

d) separating the base web from the substrate.

The steps a') and b') may be performed before drying in step c), so that intertwining of the fibers of the first layer with the fibers in the second layer is allowed by wet laying the first layer on the second layer.

In one embodiment, the liquid of the slurry may be removed by drying at room temperature, or through heating, or by applying vacuum. In a preferred embodiment the liquid is removed by reducing the pressure below the porous substrate, preferably the wire of the paper machine, more preferably the inclined wire of the paper machine, most preferably the wire of the paper machine having an inclination angle in the range of 5° to 30° to effect a flow of liquid through the porous substrate, thus removing the liquid.

In one embodiment, the first and second slurries of the process according to the claimed invention may be wet laid using a paper making machine. The paper making machine preferably has a dual layer headbox, i.e. allowing two different slurries to be laid on top of one another.

In one embodiment, the first slurry and second slurry as applied to the substrate may, respectively, contain the same or different types and proportions of fibers to form the base web. The concentrations of the different types of fibers within the first and second slurries and the relative volumes of first and second slurries applied to the substrate can be adjusted by the skilled person to reflect the desired relative amounts of fibers within the first and second layers. For example, the weight ratio of the fibers in the first layer to the fibers in the second layer is n:1, wherein n is >1. Accordingly, to achieve this with first and second slurries with the same total concentration of fibers as one another, a greater volume of the first slurry is laid down on a substrate (to form the first layer) in a wet laying technique, than the volume of the second slurry laid down on the first layer; similarly, where the first and second slurries have the same total concentration of fibers then the relative volumes of first and second slurries laid down on the substrate (or, in the case of the second slurry, on the first layer formed by the first slurry), i.e. volume of first slurry:volume of second slurry, may be n:1, e.g. wherein n is 2 to 10, optionally 3 to 5, optionally 3.5 to 4.5 optionally about 4. If the total concentration of fibers in first and second slurries is different, then the volume of the slurry laid down on the substrate can be adjusted accordingly by the skilled person, to ensure that the weight ratio of the fibers in the first layer to the fibers in the second layer is n:1, wherein n is >1.

In another embodiment, the first slurry and second slurry as applied to the substrate may, respectively, contain the same or different types and proportions of fibers to form the base web. The concentrations of the different types of fibers within the first and second slurries and the relative volumes of first and second slurries applied to the substrate can be adjusted by the skilled person to reflect the desired relative amounts of fibers within the first and second layers. For example, the weight ratio of the fibers in the first layer to the fibers in the second layer is n:1, wherein n is >1. Accordingly, to achieve this with first and second slurries with the same total concentration of fibers as one another, a smaller volume of the second slurry is laid down on a substrate (to form the second layer) in a wet laying technique, than the volume of the first slurry laid down on the second layer; similarly, where the first and second slurries have the same total concentration of fibers then the relative volumes of first and second slurries laid down on the substrate (or, in the case of the first slurry, on the second layer formed by the second slurry), i.e. volume of first slurry:volume of second slurry, may be n:1, e.g. wherein n is 2 to 10, optionally 3 to 5, optionally 3.5 to 4.5 optionally about 4. If the total concentration of fibers in first and second slurries is different, then the volume of the slurry laid down on the substrate can be adjusted accordingly by the skilled person, to ensure that the weight ratio of the fibers in the first layer to the fibers in the second layer is n:1, wherein n is >1.

The first layer and second layer may be lamellar, i.e. having first and second dimension that are larger in combination than a third dimension (i.e. a thickness direction), and typically overlap one another and occupy partly the same area of the base web. The fibers from the first layer are intertwined with the fibers from the second layer - this may be from forming first and second layer together, *e.g.* by wet laying both first and second layer together, as described herein, to allow intertwining of the fibers. Accordingly, at the point where the first and second layers meet, fibers from the first layer intertwine with the second layer and fibers from the second layer intertwine with fibers from the first layer, binding first and second layer together. This allows a continuum of the intertwined fibrous structure through the thickness of the base web and therefore a continuum of pores through the thickness of the base web. Thus, an abrupt interface as would be seen when two separately formed fibrous layers would be combined is avoided.

In one embodiment, the slurries can be applied to the porous substrate in the wet-laying process, wherein the porous substrate is preferably the wire of a paper machine, which wire is more preferably inclined to the horizontal, still more preferably at an inclination angle in the range of 5° to 30° with respect to the horizontal. Suitable inclined wire paper machines are commercially available. The use of an inclined wire was found to contribute to generating a high specific volume of the base web such as in the range of 4 $m^3/g$ to 9 $m^3/g$. This is explained by the inventors such that fibers will also orient themselves in z direction, i.e. in a thickness direction of the filter medium being manufactured, which is the case to a lesser degree when e.g. a rotoformer is used.

The present invention further relates to the following embodiments:

(1) A filter medium comprising a base web of cellulose fibers, wherein the base web comprises a first and a second layer of cellulose fibers and a transition region between the first and the second layers, wherein the cellulose fibers of the first layer and the cellulose fibers of the second layer are intertwined in the transition region, wherein the first layer comprises more cellulose fibers, expressed as mass of cellulose fibers per unit area, than the second layer, and wherein the base web has a specific volume from 4 $m^3/g$ to 9 $m^3/g$, preferably from 4.5 $m^3/g$ to 8 $m^3/g$, more preferably from 5 $m^3/g$ to 7 $m^3/g$ and most preferably from 5.5 $m^3/g$ to 6.5 $m^3/g$.

(2) The filter medium according to item (1), wherein the base web of cellulose fibers is a two-layered base web consisting of the first and the second layer of cellulose fibers with the transition region between them.

(3) The filter medium according to item (1) or (2), wherein the air permeability of the base web is from 400 to 800 $l/m^2s$.

(4) The filter medium according to any one of items (1) to (3), wherein the thickness of the base web is from 150 $\mu$m to 300 $\mu$m at 0.1 bar.

(5) The filter medium according to any one of items (1) to (4), wherein the basis weight of the base web is from 25 to 55 $g/m^2$.

(6) The filter medium according to any one of items (1) to (5), wherein the tensile strength ratio MD/CD of the base web is from 2 to 3.2.

(7) The filter medium according to any one of items (1) to (6), wherein the second layer contains curled fibers.

(8) The filter medium according to item (7), wherein the second layer contains 15 wt.-% to 40 wt.-% of curled fibers, in terms of the weight of the cellulose fibers of the second layer.

(9) The filter medium according to any one of items (1) to (8), wherein the second layer comprises uncurled fibers, preferably in an amount of 60 to 85 wt.-%, in terms of weight of the cellulose fibers of the second layer.

(10) The filter medium according to any one of items (1) to (9), wherein the base web contains 15 to 40 wt.-%, preferably 25 to 35 wt.-%, of curled fibers, in terms of the weight of the cellulose fibers of the base web in total.

(11) The filter medium according to any one of items (1) to (10), wherein the cellulose fibers of the second layer are softwood fibers.

(12) The filter medium according to any one of items (1) to (11), wherein the base web is a non-impregnated base web of cellulose fibers and/or wherein the base web does not have a coating.

(13) The filter medium according to any one of items (1) to (12), wherein the base web consists of cellulose fibers and optionally a dry strength agent in an amount of up to 1.5 wt.-% and optionally a sizing agent in an amount of up to 3.0 wt.-%, each in terms of the weight of the base web.

(14) The filter medium according to any one of items (1) to (13), which consists of the base web of cellulose fibers.

(15) The filter medium according to any one of items (1) to (14), which is a cleanable filter medium, which is optionally cleanable by pressure shock pulsing.

(16) A filter arrangement comprising a first and a second filter, wherein the first filter is a filter medium according to any one of items (1) to (15) and wherein the second filter is optionally a glass filter, paper filter or meltblown filter.

(17) The filter arrangement according to item (16), wherein the first filter is arranged upstream of the second filter when the filter arrangement is in use.

(18) The filter arrangement according to item (16) or (17), which further comprises one or two nonwoven filter layers that are optionally arranged upstream of the first and/or downstream of the second filter when the filter arrangement is in use.

(19) A filter element comprising a filter medium according to any one of items (1) to (15).

(20) An air filter comprising a filter medium according to any one of items (1) to (15).

(21) A pulse filter comprising a filter medium according to any one of items (1) to (15).

(22) A process for producing a filter medium according to any one of items (1) to (15), comprising the following steps a) to d) to produce the base web,

> a) wet laying the first layer of cellulose fibers by disposing a first slurry containing a first liquid and cellulose fibers onto a substrate, which is preferably a porous substrate,
> b) while the first layer is still wet, wet laying the second layer by disposing a second slurry containing a second liquid and cellulose fibers onto the first layer to form the transition region,
> c) drying to remove the first and the second liquid thus forming the base web, and
> d) separating the base web from the substrate.

(23) A process for producing a filter medium according to any one of items (1) to (15), comprising the following steps a'), b'), c) and d) to produce the base web,

> a') wet laying the second layer of cellulose fibers by disposing a second slurry containing a second liquid and cellulose fibers onto a substrate, which is preferably a porous substrate,
> b') while the second layer is still wet, wet laying the first layer by disposing a first slurry containing a first liquid and cellulose fibers onto the second layer to form the transition region,
> c) drying to remove the first and the second liquid thus forming the base web, and
> d) separating the base web from the substrate.

(24) The process according to item (22) or (23), wherein the first and the second slurries are disposed on the wire of a paper machine as a substrate.

(25) The process according to item (24), wherein the wire of the paper machine is inclined.

(26) The process according to item (24), wherein the wire of the paper machine is inclined at an angle in the range of 5° to 30° with respect to the horizontal.

(27) The process according to any one of items (22) to (26), wherein the first and the second liquid is water.

(28) The process according to any one of items (22) to (27), wherein the second slurry contains 15 to 40 wt.-%, preferably 25 to 35 wt.- %, of curled fibers in terms of the overall weight of fibers in the second slurry.

(29) The process according to any one of items (22) to (28), wherein the weight ratio of the cellulose fibers of the first layer to the cellulose fibers of the second layer is from 20:80 to 40:60.

(30) The filter medium according to any one of items (1) to (15), wherein the base web has a maximum pore size of 90 $\mu$m to 130 $\mu$m and preferably of 100 $\mu$m to 120 $\mu$m.

**Definitions**

In the context of the present invention, the following definitions and test methods apply.

The term "base web" as used herein refers to a fibrous sheet made of a single ply, as there is a continuous transition from the first layer to the second layer where the fibers of the first and second layer are intertwined in a transition region and as such, the single ply cannot be divided into two layers.

The term "fiber" as used herein refers to a material form characterized by an extremely high ratio of length to diameter. Fibers used herein are preferably cellulose fibers.

The term "cellulose fiber" as used herein refers to cellulose fibers, which for instance are obtainable from wood, bark or leaves of plants. Cellulose fibers originating from wood may be hardwood pulp, bleached hardwood pulp, softwood pulp, bleached softwood pulp, softwood fluff pulp, lyocell fibers (cellulose fibers which are ground and dissolved in N-methylmorpholine N-oxide monohydrate for the purpose of obtaining fibers with a cross section of variable shape (round, oval, cross-shaped, circular, lamellar cross section) with calibrated length and mass per unit length, which the person skilled in the art can choose depending on their needs), viscose fibers (fibers obtained by dissolving cellulose by means of modification of its hydroxyl groups by carbon disulfide ($CS_2$) and then precipitating it in the presence of sulfuric acid ($H_2SO_4$) for the purpose of obtaining fibers with a cross section of variable shape (round, oval, cross-shaped, circular, lamellar cross section) with calibrated length and mass per unit length, which the person skilled in the art can choose depending on their needs) or mixtures thereof, preferably bleached softwood pulp, softwood pulp, softwood fluff pulp, lyocell fibers, viscose fibers or mixtures thereof, more preferably bleached softwood pulp, softwood pulp, softwood fluff pulp or mixtures thereof, still more preferably northern softwood kraft (NBSK) pulp.

The term "specific volume" as used herein refers to the volume of the base web of the filter medium and is common in the art to determine bulking thickness. The specific volume of the base web of the filter medium of the present invention may be reached by the use of curled fibers and uncurled fibers.

The term "curled fibers" as used herein refers to fibers having the shape of a helix or a spiral. The curled fibers differ from the uncurled fibers not only in shape, but also in the air permeability of media formed of curled fibers. The air permeability of media formed of curled fibers is typically at least 20% higher than the air permeability of media formed of corresponding uncurled fibers. Curled fibers are commercially available.

The term "non-impregnated" as used herein to describe the base web of cellulose fibers refers to the absence of a process of impregnating or saturating the base web with a liquid comprising a binder. The binder may include styrene-butadiene copolymer, polyvinyl alcohol, polyvinyl acetate, polyvinyl chloride, acrylates, polyurethanes and combinations thereof.

The term "tensile strength ratio MD/CD" as used herein refers to the characteristic of the strength of the base web in machine direction and cross direction. The value is calculated by dividing the tensile strength in machine direction by the tensile strength in cross direction. The tensile strength ratio ensures that the mechanical properties of the base web are sufficient to produce the filter of the present invention.

The term "laying on" as used herein refers to the process of laying a layer on top of another layer, i.e. a layer being disposed next to each other along a thickness direction of the base web.

The term "slurry" as used herein refers to a mixture comprising fibers and liquid.

The term "liquid" as used herein refers to any kind of solvent with which the fibers can form a slurry, the liquid is preferably water.

The term "substrate" as used herein may be a porous substrate, such as a wire mesh or porous screen of a paper machine, that allows liquid from the slurries to flow through, but not the fibers of the slurries. The liquid may be removed by vacuum, e.g. by reducing the pressure below the porous substrate, to effect a flow of liquid through the substrate.

The term "thickness direction" as used herein refers to the distance from one face of the base web to the other face of the base web and is typically the shortest distance from opposing faces of the base web.

The present invention is further explained by way of examples, which are however not to be construed in a limiting sense.

**Examples**

Example 1: Manufacturing of the base web of cellulose fibers as filter medium

The base web of cellulose fibers for the filter medium was produced as follows:
A slurry comprising softwood fibers and hardwood fibers with a weight ratio of 90:10 is introduced into first head-box of a wet-laying process. A slurry comprising only softwood fibers as fibers is introduced into a second headbox of a wetlaid process. A first layer is wet-laid on a porous substrate from the first-head box, then while the first layer is still wet, the second layer is wetlaid on the first layer from the second-head box. The ratio of the fibers of the first layer to the fibers of the second layer is 70:30 respectively. The liquid is removed from the first and second layer and they are dried to form a base web. The base web is then removed from the porous substrate to obtain the filter medium.

The features of the manufactured filter medium of cellulose fibers (referred to as Example 1 below) and of a conventional pulse filter medium (referred to as Comparative Example 1) as used in pulse filters are presented in Table 1. The pulse filter medium of Comparative Example 1 is made of a layer of impregnated paper and a nanofiber layer on the upstream side. L4-2iHPNFA1 standard material Neenah Gessner.

Table 1

|  | Example 1 | Comparative Example 1 |
|---|---|---|
| Basis weight [g/m$^2$] | 36 | 121 |
| Air permeability [1/m$^2$*s] | 580 | 160 |
| Thickness [$\mu$m] (at 0.1 bar) | 220 | 410 |
| Tensile strength MD [N/15mm] | 20 | / |
| Tensile strength CD [N/15mm] | 9 | / |
| Elongation MD [%] | 1.7 | / |
| Elongation CD [%] | 4.0 | / |
| Burst strength [kPa] | 70 | >250 |
| Maximum pore size [$\mu$m] | 107 | <50 |
| Pore size of many pores [$\mu$m] | 74 | 38 |
| Specific volume [m$^3$/g] | 6.1 | 3.4 |

From Table 1, it becomes apparent that the filter medium of Example 1 has a relatively low basis weight and thickness, whereas the air permeability, the specific volume and the pore size is significantly increased compared to the filter material of Comparative Example 1.

Flat sheet testing:

The filter medium of Example 1 was further tested and compared to Comparative Example 1 in a flat sheet testing according to ISO 5011 The machine used was a Palas® MFP3000S, which is a machine for the measurement of the filter test bench. The separation efficiency of the filter medium of Example 1 and Comparative Example 1 was analysed. Therefore, the dust absorption and the air permeability was measured.

The test conditions according to ISO 5011 are described in Table 2.

Table 2

| Test conditions | |
|---|---|
| Face velocity [cm/s] | 4.2 |
| Final pressure drop [Pa] | 500 |
| Test dust | ISO fine (A2) |
| Dust concentration [mg/m$^2$] | 1000 |
| Test area [cm$^2$] | 100 |

The obtained data of the sheet testing according to ISO 5011 with the machine Palas® MFP 3000S is summarized in Table 3.

Table 3

| | | | | 500 $\triangle$p increase | | |
|---|---|---|---|---|---|---|
| material | air permeability | speed | dp start | pressure increase | dust absorption | efficiency |
| | [l/m$^2$*s] | [cm/s] | [Pa] | [Pa] | [g/m$^2$] | [%] |
| Exp. 1 | 506.5 | 4.2 | 13.9 | 507.9 | 96 | **99.16** |
| Comp. Exp. 1 | 159.5 | 4.2 | 50.2 | 507.6 | 115.5 | **99.94** |

Table 3 continued

| | pressure normed 500 Pa | | | |
|---|---|---|---|---|
| material | dust absorption | test time | apparent density | mass concentration |
| | [g/m$^2$] | [sec.] | [g/m$^2$] | [mg/m$^2$] |
| Exp. 1 | **94.5** | 2096 | 1150000 | 1100.1 |
| Comp. Exp. 1 | **113.5** | 2527.5 | 1150000 | 1088.4 |

Parameter of Table 3:

Speed: The speed describes the face velocity of the filter medium according to Table 2.

The initial pressure can be calculated by adding "dp start" to "pressure increase".

Apparent density: The apparent density is the normed dust concentration in the air flow.

Mass concentration: The mass concentration is the dust concentration in the air.

From the data in Table 3, it becomes apparent that the filter medium of Example 1 has a highly increased air permeability. Thus, higher volumes of dust-laden air can be cleaned with efficiency similar to the filter medium of Comparative Example 1. The efficiency of the filter medium of Example 1 in relation to the dust particle size according to ISO 5011 is further shown in Fig. 2.

Pulse filter test:

An additional test for the durability of the filter medium when applied as a cleanable surface filter (i.e. pulse filter) was conducted for the filter medium of Example 1 and Comparative Example 1. The filter test bench is conducted using a Topas test system (belonging to machine series AFC). A filter test was conducted for cleanable filters according to VDI 3926-2.

For the measurements of the deterioration of the filter medium after a certain number of pulse cycles with a standardized dust concentration of 5000 mg/m$^3$, a test flow rate of 5m$^3$/h and a cycle frequency of 2000 pulse cycles à 5 s are performed to track the increase in counter pressure generated by the filter medium due to clogged pores. A pulse cycle of filter operation starts with particles being separated on the surface of the filter medium, which leads to a build-up of a dust cake. The dust cake then leads to an increased differential pressure. For regeneration a pressure shock from the up-flow side of the filter medium removes the filter cake and the pulse cycle starts again. The measurement to analyse the deterioration of the filter material comprising the filter medium of Example 1 or Comparative Example 1 is shown in Fig. 3 and Fig. 4, respectively. An increase in pulse cycle numbers leads to pressure increase for both materials, due to pore clogging.

However, it is remarkable that the filter medium produced in Example 1 and tested as a pulse filter already differs in a much lower initial pressure of around 70 Pa compared to the pulse filter of Comparative Example 1 with an initial pressure of about 215 Pa. After 2000 pulse cycles the pulse filter using the filter medium produced in Example 1 only shows an increase in pressure to about 270 Pa with a pressure difference ($\Delta$p) of $\Delta$p $\approx$ 200 Pa. In contrast, the filter medium of Comparative Example 1 shows a pressure of around 600 Pa after the 2000th pulse cycle and a pressure difference of $\Delta$p $\approx$ 375 Pa. As such the filter medium according to the claimed invention shows significant improvement in its deterioration performance and thus, a better overall lifetime which can be explained by less pore clogging.

## Test Methods

Before measuring any of the below parameters, the base web or filter medium according to the present invention will be conditioned at 23°C and 50% humidity for at least 30 min. This is also mentioned in the ISO standards identified below.

Basis weight: The basis weight is determined according to the standard ISO 536:2019-11.

Air permeability: The air permeability is determined according to ISO 9237 1995-12.

Thickness: The thickness is determined according to the standard DIN EN ISO 534 2012-02.

Tensile strength: The tensile strength values in machine direction (MD) and the tensile strength values in cross direction (CD) are determined at 15 mm band width according to ISO 1924-2:2009-05.

Tensile strength ratio: The tensile strength ratio is determined by dividing tensile strength values measured in machine direction (MD) by tensile strength values measured in cross direction (CD)

Elongation at break: The elongation at break in machine direction (MD) and the elongation at break in cross direction (CD) are measured at 15 mm band width as per ISO 1924-2:2009-05.

Burst strength: The burst strength is determined according to DIN EN ISO 2758:2014-12.

Maximum pore size: The maximum pore size is determined according to ISO 4003:1990-10. The standard ISO 4003:1990-10 describes a gas bubble test for determining pore sizes of a test specimen. The pressure at which the first gas bubble becomes visible at the surface of the test specimen (e.g. the base web) is used to calculate based on the formula mentioned in section 4 of ISO 4003:1990-10 the maximum pore size of the test specimen. The test area of the test specimen can be 10 cm$^2$. Ethanol is preferably used as the test liquid in the measurement in accordance with ISO 4003:1990-10. Air is preferably used as the gas in the measurement in accordance with ISO 4003:1990-10.

Pore size of many pores: The "pore size of many pores" as used herein, is determined following ISO 4003:1990-10. That is, a measurement device described in section 5 of ISO 4003:1990-10 and schematically shown in the figure of ISO 4003:1990-10 is used and the measuring principle and measuring procedure described in ISO 4003:1990-10 are employed. The pressure at which gas bubbles form throughout the entire surface of the test specimen without foam formation is used to calculate the "pore size of many pores" based on the formula mentioned in section 4 of ISO 4003:1990-10. The test area of the test specimen can be 10 cm$^2$. Ethanol is preferably used as the test liquid in the measurement following ISO 4003:1990-10. Air is preferably used as the gas in the measurement following ISO 4003:1990-10.

Specific volume: The specific volume (Vsp) is obtained by the following formula:

$$\text{Vsp } [m^3/g] = (\text{thickness } [mm] \times 1000) / \text{ basis weight } [g/m^2]$$

The thickness and the basis weight are determined as described above.

## Claims

1. A filter medium comprising a base web of cellulose fibers, wherein the base web comprises a first and a second layer of cellulose fibers and a transition region between the first and the second layers, wherein the cellulose fibers of the first layer and the cellulose fibers of the second layer are intertwined in the transition region, wherein the first layer comprises more cellulose fibers, expressed as mass of cellulose fibers per unit area, than the second layer, and wherein the base web has a specific volume from 4 m$^3$/g to 9 m$^3$/g.

2. The filter medium according to claim 1, wherein the base web of cellulose fibers is a two-layered base web consisting of the first and the second layer of cellulose fibers with the transition region between them.

3. The filter medium according to claim 1 or 2, wherein the base web has at least one of the following features (i) to (v):

   (i) the air permeability thereof is from 400 to 800 l/m$^2$s;
   (ii) the thickness thereof is from 150 $\mu$m to 300 $\mu$m;
   (iii) the basis weight thereof is from 25 to 55 g/m$^2$;
   (iv) the tensile strength ratio MD/CD thereof is from 2 to 3.2
   (v) the maximum pore size thereof is from 90 $\mu$m to 130 $\mu$m.

4. The filter medium according to any one of claims 1 to 3, wherein the second layer contains curled fibers, preferably in an amount of 15 wt.-% to 40 wt.-%, in terms of the weight of the cellulose fibers of the second layer.

5. The filter medium according to any one of claims 1 to 4, wherein the second layer comprises uncurled fibers, preferably in an amount of 60 to 85 wt.-%, in terms of weight of the cellulose fibers of the second layer.

6. The filter medium according to any one of claims 1 to 5, wherein the base web contains 15 to 40 wt.-%, preferably 25 to 35 wt.-%, of curled fibers, in terms of the weight of the cellulose fibers of the base web in total.

7. The filter medium according to any one of claims 1 to 6, wherein the cellulose fibers of the second layer are softwood fibers.

8. The filter medium according to any one of claims 1 to 7, wherein the base web is a non-impregnated base web of cellulose fibers and/or wherein the base web consists of cellulose fibers.

9. The filter medium according to any one of claims 1 to 8, which consists of the base web of cellulose fibers.

10. The filter medium according to any one of claims 1 to 9, which is a cleanable filter medium, which is optionally cleanable by pressure shock pulsing.

11. A filter arrangement comprising a first and a second filter, wherein the first filter is a filter medium according to any one of claims 1 to 10 and wherein the second filter is optionally a glass filter, paper filter or meltblown filter.

12. The filter arrangement according to claim 11, which further comprises one or two nonwoven filter layers that are optionally arranged upstream of the first and/or downstream of the second filter.

13. A filter element comprising a filter medium according to any one of claims 1 to 10.

14. An air filter comprising a filter medium according to any one of claims 1 to 10.

15. A pulse filter comprising a filter medium according to any one of claims 1 to 10.

Fig. 1

Second layer

Transition region

First layer

Fig. 2

Fig. 3

Fig. 4

Europäisches
Patentamt

European
Patent Office

Office européen
des brevets

# EUROPEAN SEARCH REPORT

Application Number

**EP 24 21 1515**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/133681 A1 (NEENAH GESSNER GMBH [DE]) 27 June 2024 (2024-06-27) <br> * page 21, paragraph 3-6; example CE2; table 1 * <br> * page 13, lines 5-23; claim 1; table 1 * <br> ----- | 1,2,5, 7-15 | INV. <br> B01D39/18 |
| A | US 2021/387120 A1 (PETRI THOMAS [DE] ET AL) 16 December 2021 (2021-12-16) <br> * paragraph [0145]; example Sample A; table 1 * <br> ----- | 1 | |
| A | WO 2018/184046 A1 (CHEMIEFASER LENZING AG [AT]) 11 October 2018 (2018-10-11) <br> * claims 1-5 * <br> ----- | 1 | |

| | |
|---|---|
| | **TECHNICAL FIELDS SEARCHED (IPC)** |
| | B01D |

The present search report has been drawn up for all claims

| Place of search | Date of completion of the search | Examiner |
|---|---|---|
| The Hague | 24 March 2025 | Artos Fernández, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 1515

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | Publication date | Patent family member(s) | Publication date |
|---|---|---|---|
| WO 2024133681 A1 | 27-06-2024 | DE 102022134516 A1<br>WO 2024133681 A1 | 27-06-2024<br>27-06-2024 |
| US 2021387120 A1 | 16-12-2021 | US 2021387120 A1<br>WO 2021252764 A1 | 16-12-2021<br>16-12-2021 |
| WO 2018184046 A1 | 11-10-2018 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012167771 A1
- JP H09103280 A
- CN 102691234 A
- US 2012167771 A
- US 2010000693 A1
- EP 3540119 A1
- US 2010116138 A1
- US 6464830 B1
- WO 2013029697 A2